# EUROPEAN PATENT SPECIFICATION

(11) **EP 3 885 194 B1**
(45) Date of publication and mention of the grant of the patent: **09.12.2026**
(21) Application number: 20201007.0
(22) Date of filing: 09.10.2020
(51) Int. Cl.: B60Q 1/46, B60Q 1/52, B60Q 1/50, B60W 60/00, B60W 50/12

(54) **APPARATUS FOR CONTROLLING AUTONOMOUS DRIVING OF A VEHICLE AND METHOD THEREOF**
VORRICHTUNG ZUR STEUERUNG DES AUTONOMEN FAHRENS EINES FAHRZEUGS UND VERFAHREN DAFÜR
APPAREIL DE COMMANDE DE CONDUITE AUTONOME DE VÉHICULE ET PROCÉDÉ ASSOCIÉ

(30) Priority: 26.03.2020 KR 20200037053
(43) Date of publication of application: 29.09.2021
(73) Proprietor: HYUNDAI MOTOR COMPANY, Seoul 06797 (KR); Kia Corporation, Seocho-gu Seoul 06797 (KR)
(72) Inventor: Kim, Hee Kyung, Hwaseong-si, Gyeonggi-do 18280 (KR); Jeong, Jin Su, Hwaseong-si, Gyeonggi-do 18280 (KR); Jeon, Jae Yong, Hwaseong-si, Gyeonggi-do 18280 (KR)
(74) Representative: Hoffmann Eitle

(56) References cited:
- EP-A1- 3 232 286
- EP-A2- 3 552 911
- US-A1- 2015 094 899
- US-A1- 2017 120 887
- US-A1- 2018 111 628

## Description

### FIELD

The present invention relates to an autonomous driving control apparatus for a vehicle and a method thereof.

### BACKGROUND

The statements in this section merely provide background information related to the present invention.

With the development of the automobile industry, the development of an autonomous driving system and a driving assistance system (Hereinafter, for convenience of description, both autonomous driving and driving assistance are referred to as autonomous driving) that partially enables autonomous driving has been developed.

The autonomous driving system may provide various functions such as maintaining a predetermined speed, maintaining a distance between vehicles, maintaining a lane, and changing a lane. The autonomous driving system may perform autonomous driving by using various devices such as sensors for sensing vehicle's external environment, sensors for sensing vehicle information, GPS, precision maps, user state sensing systems, steering actuators, acceleration and deceleration actuators, communication circuits, and control circuits (e.g., electronic control units (ECUs)).

The autonomous driving system may monitor user's condition, and may provide an appropriate minimum risk maneuver (MRM) according to the user's condition.

An autonomous driving control apparatus wherein an emergency light is automatically flashed when a minimum risk maneuver is started, is known from EP 3 232 286 A1.

The above information disclosed in this Background section is only for enhancement of understanding of the background of the present invention.

### SUMMARY

The present invention provides an autonomous driving control apparatus for a vehicle, and a method thereof, capable of automatically flashing an emergency light and inhibiting the emergency light from being released by a user while the vehicle is driven, to protect the host vehicle and alert surrounding vehicles, after starting a minimum risk maneuver of the autonomous vehicle.

The technical objects of the present invention are not limited to the objects mentioned above, and other technical objects not mentioned can be clearly understood by those skilled in the art from the description of the claims.

The present invention is defined by the autonomous driving control apparatus according to independent claim 1.

The present invention is further defined by the autonomous driving control method according to independent claim 2.

According to the invention, it is possible to protect a host vehicle and surrounding vehicles by controlling an emergency light to be automatically flashed and the emergency light to not be turned off by a user when the vehicle is not stopped, after starting the minimum risk maneuver is started.

In addition, various effects that can be directly or indirectly identified through this document may be provided.

Further areas of applicability will become apparent from the description provided herein. It should be understood that the description and specific examples are intended for purposes of illustration only and are not intended to limit the scope of the present invention that is defined in the appended claims.

### DRAWINGS

In order that the invention may be well understood, there will now be described various forms thereof, given by way of example, reference being made to the accompanying drawings, in which:
FIG. 1 illustrates a block diagram showing a configuration of a vehicle system including an autonomous driving control apparatus according to an exemplary form of the present invention;
FIG. 2 illustrates an exemplary operation of an autonomous driving control apparatus for a vehicle according to an exemplary form of the present invention;
FIG. 3 illustrates an exemplary operation of an autonomous driving control apparatus for a vehicle according to an exemplary form of the present invention;
FIG. 4 illustrates an exemplary operation of an autonomous driving control apparatus for a vehicle according to an exemplary form of the present invention;
FIG. 5 illustrates an autonomous driving control method for a vehicle according to an exemplary form of the present invention; and
FIG. 6 illustrates a computing system according to an exemplary form of the present invention.

The drawings described herein are for illustration purposes only and are not intended to limit the scope of the present invention in any way.

### DETAILED DESCRIPTION

The following description is merely exemplary in nature and is not intended to limit the present invention, application, or uses. It should be understood that throughout the drawings, corresponding reference numerals indicate like or corresponding parts and features.

Hereinafter, some exemplary forms of the present invention will be described in detail with reference to exemplary drawings. It should be noted that in adding reference numerals to constituent elements of each drawing, the same constituent elements have the same reference numerals as possible even though they are indicated on different drawings. In addition, in describing exemplary forms of the present invention, when it is determined that detailed descriptions of related well-known configurations or functions interfere with understanding of the exemplary forms of the present invention, the detailed descriptions thereof will be omitted.

In describing constituent elements according to an exemplary form of the present invention, terms such as first, second, A, B, (a), and (b) may be used. These terms are only for distinguishing the constituent elements from other constituent elements, and the nature, sequences, or orders of the constituent elements are not limited by the terms. In addition, all terms used herein including technical scientific terms have the same meanings as those which are generally understood by those skilled in the technical field to which the present invention pertains (those skilled in the art) unless they are differently defined. Terms defined in a generally used dictionary shall be construed to have meanings matching those in the context of a related art, and shall not be construed to have idealized or excessively formal meanings unless they are clearly defined in the present specification.

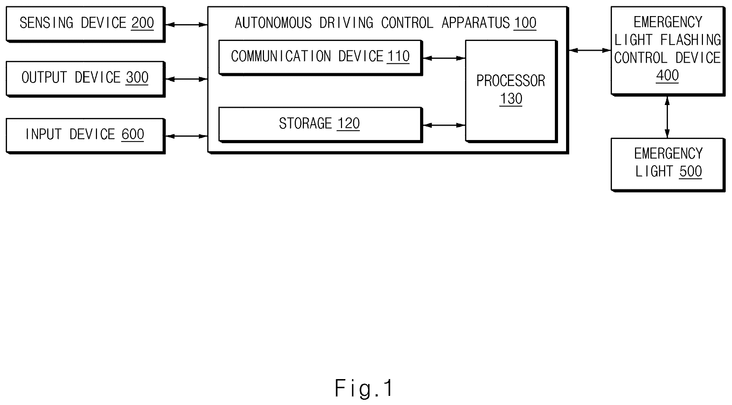

Hereinafter, exemplary forms of the present invention will be described in detail with reference to FIG. 1 to FIG. 6.

FIG. 1 illustrates a block diagram showing a configuration of a vehicle system including an autonomous driving control apparatus according to an exemplary form of the present invention.

Referring to FIG. 1, the vehicle system includes: an autonomous driving control apparatus 100 for a vehicle, a sensing device 200, an output device 300, an emergency light flashing control device 400, an emergency light 500, and an input device 600.

The autonomous driving control apparatus 100 may be implemented inside the vehicle. In this case, the autonomous driving control apparatus 100 may be integrally formed with internal control units of the vehicle, or may be implemented as a separate device to be connected to control units of the vehicle by a separate connection means.

The autonomous driving control apparatus 100 may perform at least one function among a smart cruise control (SCC), a forward collision warning (FCW), a lane keeping assist (LKA) & lane departure warning (LDW), a lane change alert (LCA), a highway driving assist (HDA), and a lane following assist (LFA).

The autonomous driving control apparatus 100 demands control authority transition of a user when a current driving condition is determined as a dangerous situation during autonomous driving control, and starts a minimum risk maneuver (MRM) to decelerate and stop the vehicle when the user does not permit the control authority transition.

In addition, the autonomous driving control apparatus 100 automatically flashes the emergency light to protect a host vehicle and to inform the dangerous situation of surrounding vehicles when starting the minimum risk maneuver. In addition, when the user arbitrarily tries to turn off the emergency light in a state in which the vehicle has not yet stopped due to the end of the minimum risk maneuver or the like, the autonomous driving control apparatus 100 ignores this try and controls flashing of the emergency light to be maintained until the minimum risk maneuver is ended and the vehicle is stopped, to prevent the dangerous situation.

To this end, the autonomous driving control apparatus 100 may include a communication device 110, a storage 120, and a processor 130.

The communication device 110, which is a hardware device implemented with various electronic circuits to transmit and receive signals through a wireless or wired connection, may perform communications with devices in the vehicle by using a network communication technique in the vehicle in the present invention, and the communications with the devices in the vehicle may be performed through controller area network (CAN) communication, local interconnect network (LIN) communication, and flex-ray communication.

As an example, the communication device 110 may transmit and receive control signals and data with respect to the sensing device 200 and the emergency light flashing control device 400.

The storage 120 stores sensing results of the sensing device 200 and data and/or algorithms required for the processor 130 to operate, and the like.

As an example, the storage 120 may store road information etc. required for autonomous driving. For example, the road information may include a map, and the like. For example, the road information may include information related to road types (e.g., an automobile road or a general road), road end points, and characteristics of lanes (e.g., confluence lanes, etc.)

The storage 120 may include a storage medium of at least one type among memories of types such as a flash memory, a hard disk, a micro, a card (e.g., an secure digital (SD) card or an extreme digital (XD) card), a random access memory (RAM), a static RAM (SRAM), a read-only memory (ROM), a programmable ROM (PROM), an electrically erasable PROM (EEPROM), a magnetic memory (MRAM), a magnetic disk, and an optical disk.

The processor 130 may be electrically connected to the communication device 110, the storage 120, and the like, may electrically control each component, and may be an electrical circuit that executes software commands, thereby performing various data processing and calculations described below.

The processor 130 may process signals transferred between constituent elements of the autonomous driving control apparatus 100 and the devices in the vehicle. The processor 130 may be, e.g., an electronic control unit (ECU), a micro controller unit (MCU), or other subcontrollers mounted in the vehicle.

The processor 130 may perform autonomous driving control. For example, the processor 130 may perform driving assistance control on the automobile road. In addition, the processor 130 controls activation of the autonomous driving control function or deactivation (release) of the autonomous driving control function.

The processor 130 determines whether a current driving condition is in a limit situation in which the autonomous driving control function is not able to operate, based on at least some of sensing information or road information during the autonomous driving control. Herein, the limit situation may include a deviation from an operation design area of the autonomous driving control function, and the like. That is, the autonomous driving control apparatus 100 may determine whether the current driving condition is in the limit situation, such as a road environment, vehicle behavior, or user misoperation, in which maintaining functions of lanes and distances between vehicles cannot be properly operated.

When it is determined that the current driving condition is in the limit situation, the processor 130 demands control authority transition in vertical and horizontal direction. When the control authority transition is not permitted by the user, the processor 130 starts the minimum risk maneuver. In this case, the minimum risk maneuver may include performing deceleration with a constant deceleration (e.g., 1 m/s²) and stop control when the user does not permit the control authority transition despite the demand for the control authority transition for a predetermined time (e.g., 10 s).

When the minimum risk maneuver is started, the processor 130 sends an emergency activation signal to the emergency light flashing control device 400 to automatically flash the emergency light, and sends a signal for disabling reactivation of the autonomous driving control function. That is, when the autonomous driving control function is released after the minimum risk maneuver is started, the autonomous driving control function may be started after the vehicle is restarted.

The processor 130 releases the autonomous driving control function when the control authority is transferred to the user within a predetermined time after starting the minimum risk maneuver.

The processor 130 determines whether the vehicle is stopped when the control authority is not transferred to the user within a predetermined time after starting the minimum risk maneuver. The processor 130 may determine whether the vehicle is stopped based on a wheel speed of the vehicle.

When receiving a demand for turning off the emergency light from the user, the processor 130 turns off the emergency light by transmitting an emergency light deactivation signal in a state where the vehicle is stopped after the minimum risk maneuver. In this case, the processor 130 may receive the demand for turning off the emergency light through the input device 600.

When the vehicle is not yet stopped after the minimum risk maneuver, i.e., when receiving the demand for turning off the emergency light from the user while the vehicle is driven, the processor 130 ignores the turn-off demand of the user and continuously transmits the emergency light activation signal to maintain a turn-on state of the emergency light until the vehicle is stopped. Accordingly, the processor 130 may allow surrounding vehicles to recognize that the dangerous situation is not over so as to prepare for the dangerous situation by continuously flashing the emergency light until the danger situation is ended.

The sensing device 200 may detect vehicle surrounding information. For example, the sensing device 200 may detect information (e.g., position, speed, and acceleration) related to an external object (e.g., vehicles, pedestrians, etc.) positioned in a front, rear, or side of the vehicle.

The sensing device 200 may detect vehicle information, e.g., positions, speeds, accelerations, steering angles, and the like of target vehicles, and a wheel speed of a host vehicle. To this end, the sensing device 200 may include an ultrasonic sensor, a radar, a camera, a laser scanner, and/or a corner radar, a lidar, an acceleration sensor, a yaw rate sensor, a torque measurement sensor and/or a wheel speed sensor, a steering angle sensor, a wheel speed sensor, etc.

The output device 300 may output notifications of, e.g., an activation or deactivation state of the autonomous driving control function, a demand for control authority transition, a message reporting that the autonomous driving control function cannot be reactivated. In addition, the output device 300 may provide a notification that the user of the vehicle can sensibly perceive. For example, the output device 300 may include a display, a voice output means such as a speaker, and/or a vibration motor. In this case, the display may include at least one of a liquid crystal display (LCD), a thin film transistor liquid crystal display (TFT LCD), an organic light emitting diode display (OLED display), a flexible display, a field emission display (FED), or a 3D display. In this case, when a touch sensor formed of a touch film, a touch sheet, or a touch pad is provided on the display, the display may operate as a touch screen, and may be implemented in a form in which an input means and an output means are integrated.

The emergency light flashing control device 400 receives the emergency light activation signal or the emergency light deactivation signal from the autonomous driving control apparatus 100 to control an on or off state of the emergency light 500.

The emergency light 500 is controlled to be flashed by the emergency light flashing control apparatus 400.

The input device 600 serves to receive on and off control commands of the emergency light 500, an activation command for an autonomous driving control function, and the like from the user. In this case, in the present invention, although one input device 600 is implemented as an example, buttons for turning on and off the emergency light and a button for activating the autonomous driving control function may be separately provided. The input device 600 may receive a command for, e.g., activation of the autonomous driving control function, from a user, and may not transfer the activation command of the autonomous driving control function to the autonomous driving control apparatus 100 when receiving the signal for disabling reactivation of the autonomous driving control function transmitted from the autonomous driving control apparatus 100. Accordingly, when receiving the signal for disabling reactivation of the autonomous driving control function, although an autonomous driving control command is inputted from the user, the input device 600 prevents the autonomous driving control function from being activated unless the vehicle is restarted. That is, the input device 600 may transmit the autonomous driving control command inputted from the user to the autonomous driving control apparatus 100 after the vehicle is restarted, after receiving the signal for disabling reactivation of the autonomous driving control function.

The input device 600 may include a key button, and may include a mouse, a joystick, a jog shuttle, a stylus pen, and the like. In addition, the input device 600 may include soft keys implemented on the display.

The present invention having such a configuration allows the emergency light to be automatically turned on when the minimum risk maneuver is started during the autonomous driving control, and even when a manipulation for turning off the emergency light is made by the user unless the vehicle stops, it ignores the turn-off manipulation, and may continue to alert the surrounding vehicles to prevent the dangerous situation as much as possible.

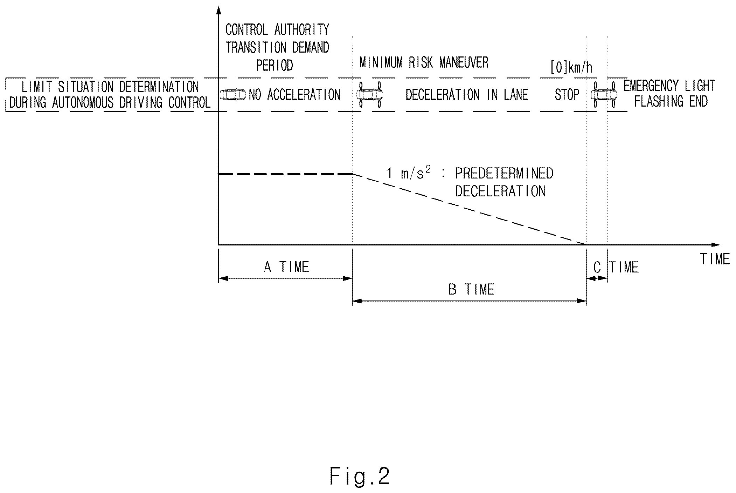

FIG. 2 illustrates an exemplary operation of an autonomous driving control apparatus according to an exemplary form of the present invention, showing an operation mechanism for control authority transition notification and minimum risk maneuver driving.

First, the autonomous driving control apparatus 100 determines whether the current driving condition is in the limit situation, such as a road environment, vehicle behavior, or user misoperation, in which maintaining functions of lanes and distances between vehicles cannot be properly operated, and notifies the user of the demand for control authority transition when it is determined that the current driving condition is in the limit situation. In this case, the autonomous driving control apparatus 100 may define a control authority transition demand period as A time (e.g., 10 s), and may make a setting so as not to accelerate the vehicle during the corresponding period. When the user does not permit the control authority transition within the predetermined time (A time) after a predetermined time after the limit situation occurs, the autonomous driving control apparatus 100 enters a minimum risk maneuver step. The autonomous driving control apparatus 100 transfers an emergency light activation signal to the emergency light flashing control device 400 within a predetermined time (e.g., 1 s) after the minimum risk maneuver is started, to automatically flash the emergency light.

The autonomous driving control apparatus 100 continuously demands the control authority transition of the user even while the minimum risk maneuver is performed. The autonomous driving control apparatus 100 performs deceleration control with a predetermined deceleration (e.g., 1 m/s²) during a minimum risk maneuver driving period, and performs stop control within a predetermined B time (e.g., up to 30 s at the maximum).

The autonomous driving control 100 transfers an emergency light deactivation signal to the emergency light flashing control device 400 within a predetermined C time (e.g., 1 s) after the minimum risk maneuver is ended, to automatically end the flashing of the emergency light.

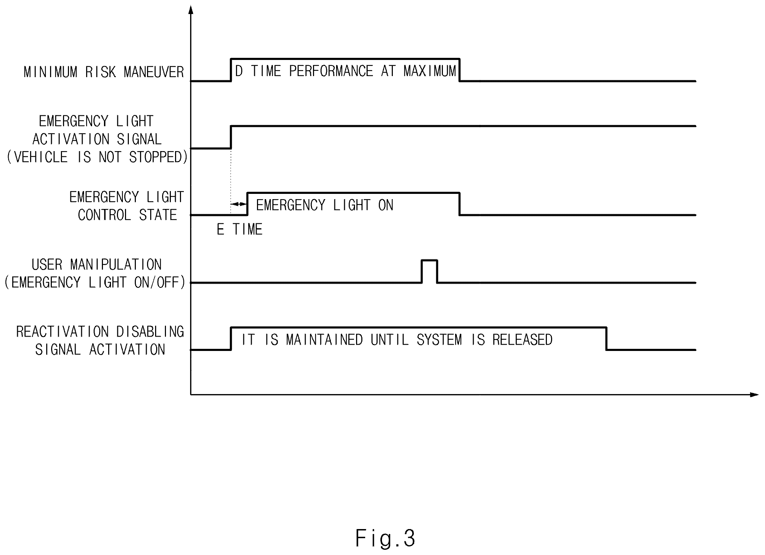

FIG. 3 illustrates an exemplary operation of an autonomous driving control apparatus according to an exemplary form of the present invention, showing an emergency light operation mechanism when the vehicle is not stopped while the minimum risk maneuver is performed.

First, the autonomous driving control apparatus 100 performs the minimum risk maneuver for a predetermined D time (e.g., up to 30 s at the maximum), and decelerates the vehicle with a constant deceleration (e.g., 1 m/s²) before the vehicle stops.

In this case, when the minimum risk maneuver is started, the emergency light activation signal and the signal for disabling reactivation of the autonomous driving control function are automatically transmitted.

When a command for turning off the emergency light is inputted by the user while the minimum risk maneuver is performed, the autonomous driving control apparatus 100 determines whether the vehicle is stopped based on a wheel speed of the vehicle, and ignores the turn-off command and continuously transmits the emergency light deactivation signal to maintain the turn-on state of the emergency light in the case where the vehicle is not stopped.

In this case, it can be seen that a control state of the emergency light is an on state within a predetermined E time (e.g., 10 ms) after the emergency light activation signal is transmitted.

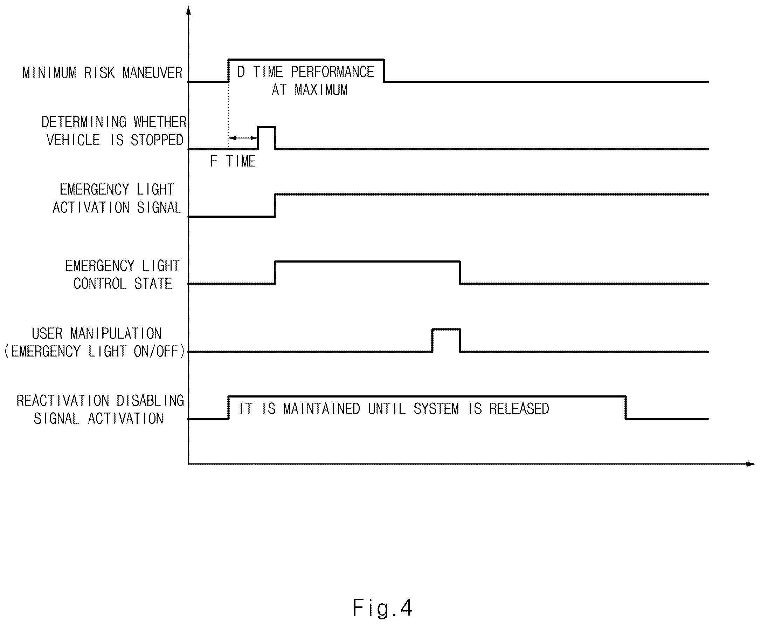

FIG. 4 illustrates an exemplary operation of an autonomous driving control apparatus according to an exemplary form of the present invention, showing an emergency light operation mechanism when the vehicle stops while the minimum risk maneuver is performed.

Referring to FIG. 4, the autonomous driving control apparatus 100 performs the minimum risk maneuver for a predetermined D time (e.g., up to 30 s at the maximum), and decelerates the vehicle with a constant deceleration (e.g., 1 m/s²) before the vehicle stops.

In this case, when the minimum risk maneuver is started, the signal for disabling reactivation of the autonomous driving control function is automatically transmitted.

The autonomous driving control apparatus 100 determines whether the vehicle is stopped based on the wheel speed of the vehicle while the minimum risk maneuver is performed, and transmits the emergency light activation signal to the emergency light flashing control device 400 after a predetermined F time (e.g., 2 s or 4 s).

When the vehicle stops within the predetermined F time after the minimum risk maneuver is started, even though the F time has not elapsed, the autonomous driving control apparatus 100 may transmit the emergency light activation signal. In this case, it can be seen that a control state of the emergency light is an on state after the emergency light activation signal is transmitted.

When the command for turning off the emergency light is inputted from the user while the emergency light is turned on by the emergency light activation signal, the autonomous driving control apparatus 100 transmits the emergency light deactivation signal for turning off the emergency light, to turn off the emergency light because the vehicle is stopped.

When the vehicle is stopped, the emergency light can be deactivated only by user manipulation, and the autonomous driving control function can also be released by the user manipulation.

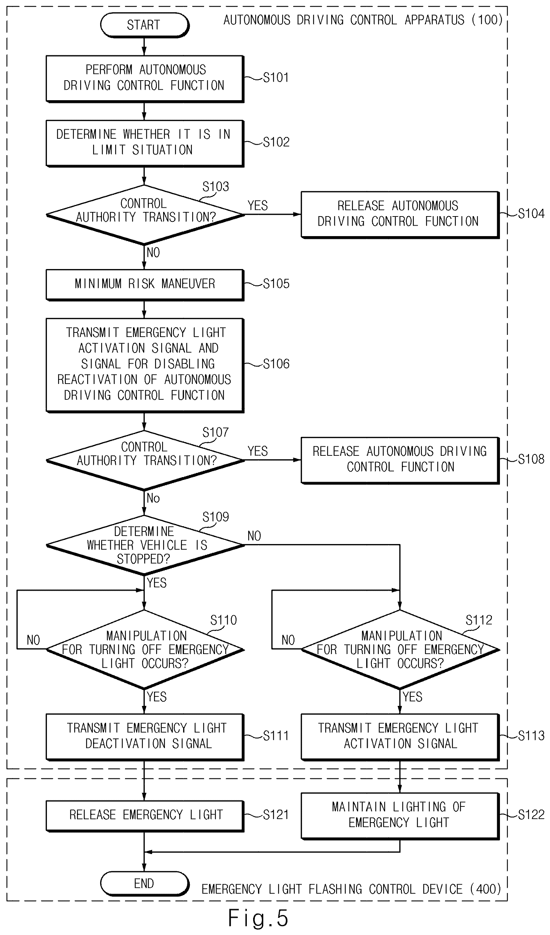

Hereinafter, an autonomous driving control method when the minimum risk maneuver for a vehicle is started according to an exemplary form of the present invention will be described in detail with reference to FIG. 5. FIG. 5 illustrates an autonomous driving control method for a vehicle according to an exemplary form of the present invention.

Hereinafter, it is assumed that the autonomous driving control apparatus 100 of the vehicle of FIG. 1 performs processes of FIG. 5. In addition, in the description of FIG. 5, operations described as being performed by a device may be understood as being controlled by the processor 130 of the autonomous driving control apparatus 100 of the vehicle.

Referring to FIG. 5, the autonomous driving control apparatus 100 determines whether the limit situation has occurred (S102) while performing an autonomous driving control mode (S101). In this case, the limit situation is a situation in which the autonomous driving control function cannot normally operate, and may include, e.g., a situation in which the autonomous driving control function is out of an operating design area.

The autonomous driving control apparatus 100 demands control authority transition in vertical and horizontal direction such that the user can directly control the driving in the limit situation (S103). Accordingly, when the user permits the control authority transition, the autonomous driving control apparatus 100 releases the autonomous driving control mode (S104).

On the other hand, when the user does not permit the control authority transition within a predetermined time (e.g., 10 s) despite the limited situation, the autonomous driving control apparatus 100 starts the minimum risk maneuver (S105). In this case, the minimum risk maneuver may include performing deceleration with a predetermined speed and stop control.

The autonomous driving control apparatus 100 transmits an emergency light activation signal and a signal for disabling reactivation of the autonomous driving control function (S106). In this case, the emergency light activation signal is transmitted to the emergency light flashing control device 400, and the emergency light is automatically turned on by the emergency light activation signal. The signal for disabling reactivation of the autonomous driving control function is transmitted to a device related to the autonomous driving in the vehicle or the output device 300.

The autonomous driving control apparatus 100 continues to determine whether the control authority transition is permitted after the minimum risk maneuver (S107), and releases the autonomous driving control function when the control authority transition is permitted by the user (S108). In this case, even when the vehicle is not stopped during the minimum risk maneuver, control authority can be transferred to the user at any time, and when the autonomous driving control function is released by transferring the control authority, a manipulation for turning off the emergence light may be made at any time.

On the other hand, when the control authority is not transferred to the user even after the minimum risk maneuver is started, the autonomous driving control apparatus 100 continues to perform the minimum risk maneuver, and transmits the emergency light activation signal and the signal for disabling reactivation of the autonomous driving control function (S108). In this case, the signal for disabling reactivation of the autonomous driving control function is transmitted to the input device 600, the output device 300, the device related to the autonomous driving in the vehicle, and the like. Accordingly, the output device 300 may output a guide message to the user to report that reactivation is not possible before restarting.

Subsequently, the autonomous driving control apparatus 100 determines whether the vehicle is stopped based on a wheel speed of the vehicle when the minimum risk maneuver is ended (S109).

After the vehicle is determined to be stopped, when the manipulation for turning off the emergence light is inputted from the user (S110), the autonomous driving control apparatus 100 transmits the emergency light deactivation signal to the emergency light flashing control device 400 (S111), and the emergency light flashing control device 400 releases lighting of the emergency light (S121). However, the autonomous driving control apparatus 100 may be implemented to transmit the emergency light deactivation signal to release the lighting of the emergency light even when an input for turning off the emergency light is not received while the vehicle is stopped.

On the other hand, when the vehicle is not stopped, even though the manipulation for turning off the emergence light is inputted from the user (S112), the autonomous driving control apparatus100 continuously transmits the emergency light activation signal to the emergency light flashing control device 400 (S113), and the emergency light flashing control device 400 maintains the lighting of the emergency light (S122).

As described above, in the present invention, after determining a limit situation in which autonomous driving control is impossible during autonomous driving control, when the minimum risk maneuver is started because a driver does not receive the control authority, it is possible to send a warning alarm to surrounding vehicles by compulsorily turning on the emergency light.

In addition, the present invention may continuously warn the surrounding vehicles that they are in a dangerous situation until the vehicle is completely stopped in the dangerous situation by preventing flashing of the emergency light from being stopped by the manipulation for turning off the emergence light that is made by the user until the vehicle is stopped due to the end of the minimum risk maneuver or the vehicle is stopped during the minimum risk maneuver.

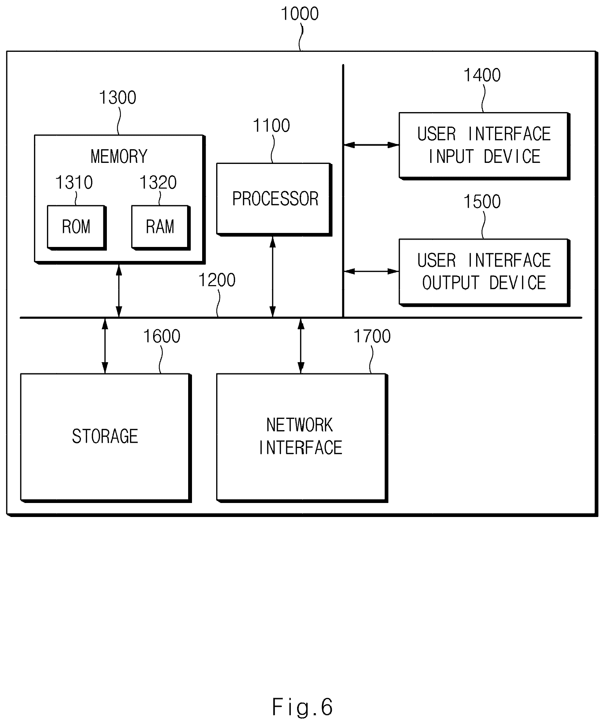

FIG. 6 illustrates a computing system according to an exemplary form of the present invention.

Referring to FIG. 6, the computing system 1000 includes at least one processor 1100 connected through a bus 1200, a memory 1300, a user interface input device 1400, a user interface output device 1500, and a storage 1600, and a network interface 1700.

The processor 1100 may be a central processing unit (CPU) or a semiconductor device that performs processing on commands stored in the memory 1300 and/or the storage 1600. The memory 1300 and the storage 1600 may include various types of volatile or nonvolatile storage media. For example, the memory 1300 may include a read only memory (ROM) and a random access memory (RAM).

Accordingly, steps of a method or algorithm described in connection with the exemplary forms disclosed herein may be directly implemented by hardware, a software module, or a combination of the two, executed by the processor 1100. The software module may reside in a storage medium (i.e., the memory 1300 and/or the storage 1600) such as a RAM memory, a flash memory, a ROM memory, a EPROM memory, a EEPROM memory, a register, a hard disk, a removable disk, and a CD-ROM.

An exemplary storage medium is coupled to the processor 1100, which can read information from and write information to the storage medium. Alternatively, the storage medium may be integrated with the processor 1100. The processor and the storage medium may reside within an application specific integrated circuit (ASIC). The ASIC may reside within a user terminal. Alternatively, the processor and the storage medium may reside as separate components within the user terminal.

The above description is merely illustrative of the present invention, and those skilled in the art to which the present invention pertains may make various modifications and variations without departing from the scope the present invention that is defined by the appended claims.

## Claims

1. An autonomous driving control apparatus (100) comprising:
a processor (130) and a storage (120) configured to store a set of instructions to be executed by the processor (130) and data for determination and performance by the processor (130), the processor (130) being configured to:
demand a user of a vehicle to take a control authority of the vehicle when determining that a current driving condition of the vehicle is in a limit situation in which the autonomous driving control is not able to operate, based on road information or sensing information, during an autonomous driving control,
start a minimum risk maneuver when the control authority is not transferred to the user,
send an emergency light activation signal to an emergency light flashing control device (400) to automatically flash an emergency light (500) when the minimum risk maneuver is started,
release the autonomous driving control when the control authority is transferred to the user within a predetermined time after starting the minimum risk maneuver,
determine whether the vehicle is stopped when the control authority is not transferred to the user within a predetermined time after starting the minimum risk maneuver.
**characterised in that** the processor (130) is further configured to:
transmit a signal for disabling reactivation of the autonomous driving control to at least one of an input device for inputting an autonomous driving control command, an output device for outputting an autonomous driving control state, or a device related to the autonomous driving control in the vehicle,
when the vehicle is not stopped after the minimum risk maneuver is started, ignore a demand for turning off the emergency light (500) from the user and continuously transmit the emergency light activation signal to maintain a turn-on state of the emergency light (500) until the vehicle is stopped, and
when the vehicle is stopped, transmit an emergency light (500) deactivation signal to turn off the emergency light (500) when receiving a demand for turning off the emergency light (500) from the user.

2. An autonomous driving control method comprising:
determining, by a processor (130), whether a current driving condition is in a limit situation in which an autonomous driving control is not able to operate, based on road information or sensing information, during an autonomous driving control;
requesting, by the processor (130), a transfer of a control authority of a vehicle to a user of the vehicle when determining that the current driving condition is in the limit situation;
starting, by the processor (130), a minimum risk maneuver when the control authority is not transferred to the user,
automatically flashing, by sending an emergency light activation signal to an emergency light flashing control device (400) from the processor (130), an emergency light (500);
releasing, by the processor (130), the autonomous driving control when the control authority is transferred to the user within a predetermined time after starting the minimum risk maneuver;
determining, by the processor (130), whether the vehicle is stopped when the control authority is not transferred to the user within a predetermined time after starting the minimum risk maneuver;
**characterised in that** the method further comprises:
transmitting, by the processor (130), a signal for disabling reactivation of the autonomous driving control to at least one of an input device for inputting an autonomous driving control command, an output device for outputting an autonomous driving control state, or a device related to the autonomous driving control in the vehicle;
ignoring a demand for turning off the emergency light (500) from the user when the vehicle is not stopped after the minimum risk maneuver is started, and
continuously transmitting the emergency light activation signal to maintain a turn-on state of the emergency light (500) until the vehicle is stopped; and
when the vehicle is stopped, transmitting, by the processor (130), an emergency light (500) deactivation signal to turn off the emergency light (500) when receiving a demand for turning off the emergency light (500) from the user.

## Patentansprüche

1. Vorrichtung (100) zur autonomen Fahrsteuerung, umfassend:
einen Prozessor (130) und einen Speicher (120), der ausgebildet ist, einen Satz von durch den Prozessor (130) auszuführenden Anweisungen und Daten zur Feststellung und Durchführung durch den Prozessor (130) zu speichern, wobei der Prozessor (130) ausgebildet ist:
einen Benutzer eines Fahrzeugs aufzufordern, die Steuergewalt des Fahrzeugs zu übernehmen, wenn basierend auf Straßeninformationen oder Sensorinformationen während einer autonomen Fahrsteuerung festgestellt wird, dass sich ein aktueller Fahrzustand des Fahrzeugs in einer Grenzsituation befindet, in der die autonome Fahrsteuerung nicht in der Lage ist, zu arbeiten,
ein Manöver mit minimalem Risiko zu starten, wenn die Steuergewalt nicht auf den Benutzer übertragen wird,
ein Aktivierungssignal für das Warnblinklicht an eine Blinksteuervorrichtung (400) für das Warnblinklicht zu senden, um ein Warnblinklicht (500) automatisch blinken zu lassen, wenn das Manöver mit minimalem Risiko gestartet wird,
die autonome Fahrsteuerung aufzuheben, wenn die Steuergewalt innerhalb einer vorbestimmten Zeit nach dem Starten des Manövers mit minimalem Risiko auf den Benutzer übertragen wird,
festzustellen, ob das Fahrzeug zum Stillstand gekommen ist, wenn die Steuergewalt nicht innerhalb einer vorbestimmten Zeit nach dem Starten des Manövers mit minimalem Risiko auf den Benutzer übertragen wird.
**dadurch gekennzeichnet, dass** der Prozessor (130) weiter ausgebildet ist:
ein Signal zum Sperren der Reaktivierung der autonomen Fahrsteuerung an mindestens eine der folgenden Vorrichtungen zu übertragen: eine Eingabevorrichtung zum Eingeben eines Befehls zur autonomen Fahrsteuerung, eine Ausgabevorrichtung zum Ausgeben eines Status der autonomen Fahrsteuerung oder eine mit der autonomen Fahrsteuerung in dem Fahrzeug in Zusammenhang stehende Vorrichtung,
wenn das Fahrzeug nicht zum Stillstand gekommen ist, nachdem das Manöver mit minimalem Risiko gestartet worden ist, eine Aufforderung zum Ausschalten des Warnblinklichts (500) von dem Benutzer zu ignorieren und das Aktivierungssignal für das Warnblinklicht fortlaufend zu übertragen, um einen eingeschalteten Zustand des Warnblinklichts (500) aufrechtzuerhalten, bis das Fahrzeug zum Stillstand gekommen ist, und
wenn das Fahrzeug zum Stillstand gekommen ist, ein Deaktivierungssignal für das Warnblinklicht (500) zu übertragen, um das Warnblinklicht (500) auszuschalten, wenn eine Aufforderung zum Ausschalten des Warnblinklichts (500) von dem Benutzer empfangen wird.

2. Verfahren zur autonomen Fahrsteuerung, umfassend:
Feststellen, durch einen Prozessor (130), basierend auf Straßeninformationen oder Sensorinformationen während einer autonomen Fahrsteuerung, ob sich ein aktueller Fahrzustand in einer Grenzsituation befindet, in der eine autonome Fahrsteuerung nicht in der Lage ist, zu arbeiten;
Anfordern, durch den Prozessor (130), der Übertragung der Steuergewalt eines Fahrzeugs an einen Benutzer des Fahrzeugs, wenn festgestellt wird, dass sich der aktuelle Fahrzustand in der Grenzsituation befindet;
Starten, durch den Prozessor (130), eines Manövers mit minimalem Risiko, wenn die Steuergewalt nicht auf den Benutzer übertragen wird, und
automatisches Blinkenlassen, durch Senden eines Aktivierungssignals für das Warnblinklicht an eine Blinksteuervorrichtung (400) für das Warnblinklicht von dem Prozessor (130), eines Warnblinklichts (500);
Aufheben, durch den Prozessor (130), der autonomen Fahrsteuerung, wenn die Steuergewalt innerhalb einer vorbestimmten Zeit nach dem Starten des Manövers mit minimalem Risiko auf den Benutzer übertragen wird;
Feststellen, durch den Prozessor (130), ob das Fahrzeug zum Stillstand gekommen ist, wenn die Steuergewalt nicht innerhalb einer vorbestimmten Zeit nach dem Starten des Manövers mit minimalem Risiko auf den Benutzer übertragen wird; **dadurch gekennzeichnet, dass** das Verfahren weiter umfasst:
Übertragen, durch den Prozessor (130), eines Signals zum Sperren der Reaktivierung der autonomen Fahrsteuerung an mindestens eine der folgenden Vorrichtungen: eine Eingabevorrichtung zum Eingeben eines Befehls zur autonomen Fahrsteuerung, eine Ausgabevorrichtung zum Ausgeben eines Status der autonomen Fahrsteuerung oder eine mit der autonomen Fahrsteuerung in dem Fahrzeug in Zusammenhang stehende Vorrichtung;
Ignorieren einer Aufforderung zum Ausschalten des Warnblinklichts (500) von dem Benutzer, wenn das Fahrzeug nicht zum Stillstand gekommen ist, nachdem das Manöver mit minimalem Risiko gestartet worden ist, und fortlaufendes Übertragen des Aktivierungssignals für das Warnblinklicht, um einen eingeschalteten Zustand des Warnblinklichts (500) aufrechtzuerhalten, bis das Fahrzeug zum Stillstand gekommen ist; und
wenn das Fahrzeug zum Stillstand gekommen ist, Übertragen, durch den Prozessor (130), eines Deaktivierungssignals für das Warnblinklicht (500), um das Warnblinklicht (500) auszuschalten, wenn eine Aufforderung zum Ausschalten des Warnblinklichts (500) von dem Benutzer empfangen wird.

## Revendications

1. Appareil de commande de conduite autonome (100) comprenant :
un processeur (130) et une unité de stockage (120) configurée pour stocker un jeu d'instructions à exécuter par le processeur (130) et des données pour détermination et réalisation par le processeur (130), le processeur (130) étant configuré pour :
demander à un utilisateur d'un véhicule de prendre l'autorité de commande du véhicule lorsqu'il est déterminé qu'une condition de conduite actuelle du véhicule est dans une situation limite dans laquelle la commande de conduite autonome n'est pas en mesure de fonctionner, sur la base d'informations routières ou d'informations de détection, pendant une commande de conduite autonome,
démarrer une manœuvre à risque minimal lorsque l'autorité de commande n'est pas transférée à l'utilisateur,
envoyer un signal d'activation de feu de détresse à un dispositif de commande (400) de clignotement de feu de détresse pour faire clignoter automatiquement un feu de détresse (500) lorsque la manœuvre à risque minimal est démarrée,
relâcher la commande de conduite autonome lorsque l'autorité de commande est transférée à l'utilisateur dans un délai prédéterminé après le démarrage de la manœuvre à risque minimal,
déterminer si le véhicule est arrêté lorsque l'autorité de commande n'est pas transférée à l'utilisateur dans un délai prédéterminé après le démarrage de la manœuvre à risque minimal.
**caractérisé en ce que** le processeur (130) est en outre configuré pour :
transmettre un signal pour désactiver la réactivation de la commande de conduite autonome à au moins un parmi un dispositif d'entrée destiné à entrer une instruction de commande de conduite autonome, un dispositif de sortie destiné à délivrer un état de commande de conduite autonome ou un dispositif lié à la commande de conduite autonome dans le véhicule,
lorsque le véhicule n'est pas arrêté après que la manœuvre à risque minimal a démarré,
ignorer une demande d'extinction du feu de détresse (500) provenant de l'utilisateur et transmettre en continu le signal d'activation de feu de détresse afin de maintenir un état allumé du feu de détresse (500) jusqu'à ce que le véhicule soit arrêté, et
lorsque le véhicule est arrêté, transmettre un signal de désactivation de feu de détresse (500) pour éteindre le feu de détresse (500) lors de la réception d'une demande d'extinction du feu de détresse (500) provenant de l'utilisateur.

2. Procédé de commande de conduite autonome comprenant :
le fait de déterminer, par un processeur (130), si une condition de conduite actuelle est dans une situation limite dans laquelle une commande de conduite autonome n'est pas en mesure de fonctionner, sur la base d'informations routières ou d'informations de détection, pendant une commande de conduite autonome ;
la demande, par le processeur (130), d'un transfert de l'autorité de commande d'un véhicule à un utilisateur du véhicule lorsqu'il est déterminé que la condition de conduite actuelle est dans la situation limite ;
le démarrage, par le processeur (130), d'une manœuvre à risque minimal lorsque l'autorité de commande n'est pas transférée à l'utilisateur, et
le clignotement automatique d'un feu de détresse (500), par l'envoi d'un signal d'activation de feu de détresse à un dispositif de commande (400) de clignotement de feu de détresse depuis le processeur (130);
l'arrêt, par le processeur (130), de la commande de conduite autonome lorsque l'autorité de commande est transférée à l'utilisateur dans un délai prédéterminé après le démarrage de la manœuvre à risque minimal ;
le fait de déterminer, par le processeur (130), si le véhicule est arrêté lorsque l'autorité de commande n'est pas transférée à l'utilisateur dans un délai prédéterminé après le démarrage de la manœuvre à risque minimal ;
**caractérisé en ce que** le procédé comprend en outre :
la transmission, par le processeur (130), d'un signal pour désactiver la réactivation de la commande de conduite autonome à au moins un parmi un dispositif d'entrée destiné à entrer une instruction de commande de conduite autonome, un dispositif de sortie destiné à délivrer un état de commande de conduite autonome ou un dispositif lié à la commande de conduite autonome dans le véhicule ; le fait d'ignorer une demande d'extinction du feu de détresse (500) provenant de l'utilisateur lorsque le véhicule n'est pas arrêté après que la manœuvre à risque minimal a démarré, et
la transmission en continu du signal d'activation de feu de détresse afin de maintenir un état allumé du feu de détresse (500) jusqu'à ce que le véhicule soit arrêté ;
et
lorsque le véhicule est arrêté, la transmission, par le processeur (130), d'un signal de désactivation de feu de détresse (500) pour éteindre le feu de détresse (500) lors de la réception d'une demande d'extinction du feu de détresse (500) provenant de l'utilisateur.
